# EUROPÄISCHE PATENTSCHRIFT

(11) **EP 1 360 098 B1**
(45) Veröffentlichungstag und Bekanntmachung des Hinweises auf die Patenterteilung: **07.09.2005**
(21) Anmeldenummer: 02712889.1
(22) Anmeldetag: 04.02.2002
(51) Int. Cl.: B60T 8/36, B60T 8/40, F04B 17/03, H02K 7/075

(54) **AGGREGAT FÜR EINE ELEKTRONISCH GEREGELTE BREMSANLAGE**
UNIT FOR AN ELECTRONICALLY REGULATED BRAKING SYSTEM
ORGANE POUR SYSTEME DE FREINAGE REGULATION ELECTRONIQUE

(30) Priorität: 02.02.2001 DE 10104637
(43) Veröffentlichungstag der Anmeldung: 12.11.2003
(73) Patentinhaber: Continental Teves AG & Co. oHG, 60488 Frankfurt am Main (DE)
(72) Erfinder: VOLZ, Peter, 64291 Darmstadt (DE)
(86) Internationale Anmeldenummer: PCT/EP2002/001128
(87) Internationale Veröffentlichungsnummer: WO 2002/060734

(56) Entgegenhaltungen:
- EP-A- 0 921 048
- DE-A- 4 225 358
- DE-A- 4 231 784
- DE-A- 19 709 776
- DE-A- 19 710 015
- US-A- 5 281 013

## Beschreibung

Die vorliegende Erfindung betrifft ein Aggregat für eine elektronisch geregelte Bremsanlage mit einem Motor, der über eine Welle eine Pumpe antreibt, die in einem Ventil- bzw. Pumpenblock angeordnet ist und Hydraulikflüssigkeit in Radbremsen der Bremsanlage fördert, und mit einer Reglereinheit, die auf einer dem Motor gegenüberliegenden Seite des Ventil- bzw. Pumpenblocks vorgesehen ist, wobei das Aggregat wenigstens einen Sensor zur Erfassung der Drehzahl des Motors bzw. der Welle umfaßt.

Elektronisch geregelte Bremsanlagen sind allgemein bekannt und werden insbesondere in Kraftfahrzeugen verwendet. Dabei gibt es verschiedene Systeme bzw. Regelungen, wie beispielsweise Anti-Blockiersysteme (ABS), Antriebsschlupfregelungen (ASR), elektronische Stabilitätsprogramme (ESP) oder elektro-hydraulische Bremsanlagen (EHB). Aus dem Stand der Technik ist eine Vielzahl von Aggregaten für derartige Bremsanlagen bekannt. Die Erfindung kann grundsätzlich bei allen diesen Bremsanlagen eingesetzt werden, wobei sie insbesondere für elektro-hydraulische Bremsanlagen (EHB) geeignet ist.

Bei modernen elektronisch geregelten Bremsanlagen ist die genaue Kenntnis von Motordrehzahlinformationen von zunehmender Wichtigkeit. Die Kenntnis der exakten Motordrehzahl wird unter anderem zur Regelung des Fördervolumens der Pumpe, zur Reduzierung der Geräusche von Motor bzw. Pumpe und zur Absicherung des gesamten Sicherheitskonzeptes der Bremsanlage herangezogen.

Derzeit sind verschiedene Regelsysteme für eine Bremsanlage bekannt, bei denen im Leerlauf bzw. Auslauf eines nicht bestromten Motors die abgegebene Generatorspannung zur Generierung der Drehzahlinformation bzw. des -signales herangezogen wird. Diese Methode ist sehr ungenau, da sie von vielen Störeinflüssen abhängig ist, wie beispielsweise Reibung, Spannungsschwankungen im Bordnetz des Kraftfahrzeuges oder dem Zustand eines Kollektors bzw. von Bürsten des Motors.

Darüber hinaus gibt es Regelsysteme bzw. Motoren, bei denen eine zusätzliche Bürste auf dem Kollektor läuft und der Spannungsverlauf an dieser Bürste zur Erzeugung des Drehzahlsignales herangezogen wird. Auch diese Methode ist sehr ungenau und schwierig zu beherrschen. Insbesondere bei bürstenlosen, elektronisch kommutierenden Motoren können die vorgenannten Methoden zur Generierung eines Drehzahlsignales nicht angewendet werden, so daß hier beispielsweise separate Sensoren zur Erfassung des Drehzahlsignals erforderlich sein können.

Entsprechend sind bereits Motoren bekannt, bei denen zusätzliche Sensoren im Innenraum des Motors angeordnet sind. Ein derartiger Motor ist beispielsweise in der US 6,127,752 offenbart. Dies erfordert einen relativ großen Bauraum im Innenraum des Motors, wobei sich gleichzeitig die Übertragung der Drehzahlsignales zu einer entsprechenden Auswerteeinheit bzw. zur Reglereinheit der elektronisch geregelten Bremsanlage, die üblicherweise auf der dem Motor gegenüberliegenden Seite des Ventil- bzw. Pumpenblocks angeordnet ist, recht aufwendig gestaltet.

Bei den derzeit bekannten Anordnungen von Sensoren im Innenraum des Motors sind deshalb zusätzliche Leitungsverbindungen zur Reglereinheit erforderlich. Diese elektrischen Verbindungen können über zusätzliche Kabel zwischen Motor und Reglereinheit realisiert werden, wobei zusätzliche Stecker bzw. Befestigungspunkte notwendig sein können. Denkbar ist hier auch eine Lösung, bei der die elektrischen Verbindungen zur Übertragung des Drehzahlsignales unmittelbar durch den Ventil- bzw. Pumpenblock geführt werden. Diese Lösung besitzt aber den Nachteil, daß zusätzlicher Bauraum zwischen den im Ventil- bzw. Pumpenblock angeordneten hydraulischen Kanälen bzw. Bauelementen, wie der Pumpe oder verschiedenen Ventilen, erforderlich ist, der nicht ohne weiteres zur Verfügung steht.

Es ist deshalb die Aufgabe der vorliegenden Erfindung, ein Aggregat für eine elektronisch geregelte Bremsanlage derart weiterzubilden, daß der vom Aggregat benötigte Bauraum möglichst klein gehalten wird, wobei gleichzeitig eine sichere und einfache Übertragung des Drehzahlsignales ermöglicht wird. Gleichzeitig soll das Aggregat möglichst kostengünstig herstellbar sein.

Diese Aufgabe wird erfindungsgemäß dadurch gelöst, daß bei einem Aggregat für eine elektronisch geregelte Bremsanlage zumindest ein Sensorelement des Sensors im Bereich der Reglereinheit vorgesehen ist, so dass eine Kontaktierung vom Sensorelement zur Reglereinheit innerhalb der Reglereinnheit verläuft. Eine Kontaktierung vom Sensorelement, das ein Drehzahlsignal aufnimmt bzw. weitergibt, zur Reglereinheit verläuft somit gemäß der vorliegenden Erfindung innerhalb der Reglereinheit, wodurch im Vergleich zu einem vollständig im Innenraum des Motors angeordneten Sensor zusätzliche äußere Leitungen bzw. eine anderweitige Kontaktierung durch den Ventil- bzw. Pumpenblock hindurch entfallen können. Dies ermöglicht die Schaffung eines kostengünstigen, kleinbauenden Aggregates und eine sichere und einfache Übertragung des Drehzahlsignales.

Mit Vorteil weist die Reglereinheit eine Platine auf, wobei das Sensorelement über die Kontaktierung vorzugsweise direkt mit der Platine verbunden ist. In der Kontaktierung, d.h. zwischen Sensorelement und Platine, kann insbesondere auch eine Steckverbindung vorhanden sein, so daß eine Trennung von Ventil- bzw. Pumpenblock und Reglereinheit möglich ist. Die Reglereinheit ist nämlich gemäß einer besonders bevorzugten Ausführungsform der vorliegenden Erfindung als ein eigenständig handhabbares Bauteil ausgebildet.

Als Sensor kann beispielsweise ein optischer Sensor oder auch ein magnetosensitiver Sensor mit einem optischen bzw. magnetosensitiven Sensorelement vorgesehen sein. Mögliche Beispiele für einen optischen Sensor sind Sensoren, die mittels Laser, Infrarot oder einer Fotozelle funktionieren. Es ist aus Sicherheitsgründen auch möglich, daß mehrere Sensoren eingesetzt werden, die sich gegenseitig überwachen.

Vorzugsweise ist ein Kodierelement des Sensors drehfest an der Welle bzw. an sich mit der Welle mitdrehenden Bauteilen, wie etwa einem Exzenter der Pumpe, angeordnet. Das Kodierelement kann beispielsweise magnetisch sein oder wenigstens einen optischen Kontrast aufweisen.

Zwischen dem Kodierelement und dem Sensorelement ist mit besonderem Vorteil insbesondere eine Abdeckung vorgesehen. Die Abdeckung verhindert, daß beispielsweise Hydraulik- oder Schmierflüssigkeit aus einem Kurbelraum der Pumpe das Sensorelement verschmutzen oder beschädigen kann. Entsprechend den oben genannten Sensorvarianten kann die Abdeckung antimagnetisch und/oder transparent ausgebildet sein.

In der nachfolgenden Beschreibung werden weitere Merkmale und Einzelheiten der Erfindung in Zusammenhang mit den beigefügten Zeichnungen anhand von Ausführungsbeispielen näher erläutert. Dabei sind in einzelnen Varianten beschriebene Merkmale und Zusammenhänge grundsätzlich auf alle Ausführungsbeispiele übertragbar. In den Zeichnungen zeigen:
- Fig. 1: eine schematische Ansicht einer ersten Ausführungsform des erfindungsgemäßen Aggregates für eine elektronisch geregelte Bremsanlage,
- Fig. 2: eine zweite Ausführungsform des erfindungsgemäßen Aggregates, teilweise im Schnitt, und
- Fig. 3: im Detail die bereits in Fig. 1 gezeigte Ausführungsform des Aggregates gemäß der vorliegenden Erfindung, ebenfalls in einer teilweisen Schnittansicht.

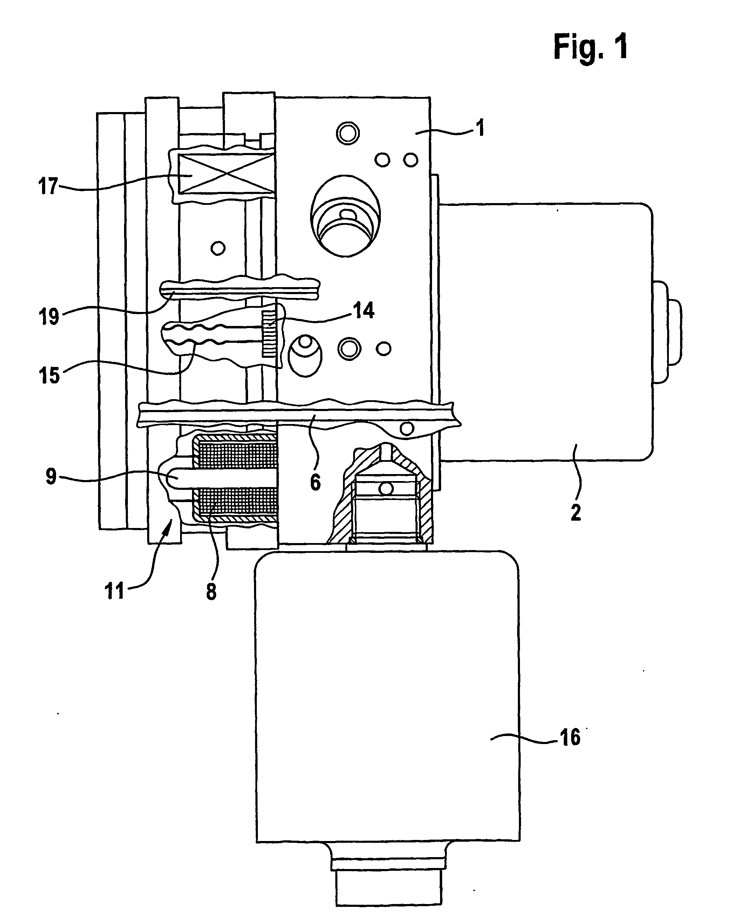

Das in Fig. 1 schematisch in einer Seitenansicht dargestellte Aggregat für eine elektronisch geregelte Bremsanlage umfaßt einen Ventil- bzw. Pumpenblock 1, in dem eine nicht gezeigte Pumpe angeordnet ist, die über eine in Fig. 1 ebenfalls nicht dargestellte Welle eines Motors 2 betätigt wird. Die Pumpe fördert in bekannter Weise Hydraulikflüssigkeit in nicht dargestellte Radbremsen der Bremsanlage. Der Motor 2 ist an einer Seite des Ventil- bzw. Pumpenblocks 1 vorgesehen und über einen Motorstecker 6 mit einer Reglereinheit 11 elektrisch leitend verbunden, d.h. der Motor 2 wird über den Motorstecker 6 mit Strom versorgt und angesteuert bzw. geregelt. Die Reglereinheit 11 ist dabei auf der dem Motor 2 gegenüberliegenden Seite des Ventil- bzw. Pumpenblocks 1 angeordnet.

In üblicher Weise sind teilweise in der Reglereinheit 11 und teilweise im Ventil- bzw. Pumpenblock 1 angeordnete Magnetventile 8, 9 vorgesehen, wobei sich Ventilspulen 8 und Ventildome 9 der Magnetventile 8, 9 weitestgehend innerhalb des Reglergehäuses 11 befinden. Am Ventil- bzw. Pumpenblock 1 ist optional ferner ein Speicher 16 vorgesehen, der insbesondere bei Bremsanlagen mit einem elektronische Stabilitätsprogramm (ESP) oder elektro-hydraulischen Bremsanlagen (EHB) zur Speicherung der Hydraulikflüssigkeit erforderlich ist. Die Erfindung ist jedoch nicht auf derartige Bremsanlagen beschränkt. Weiterhin können am Aggregat ein oder mehrere Drucksensoren 17 vorhanden sein.

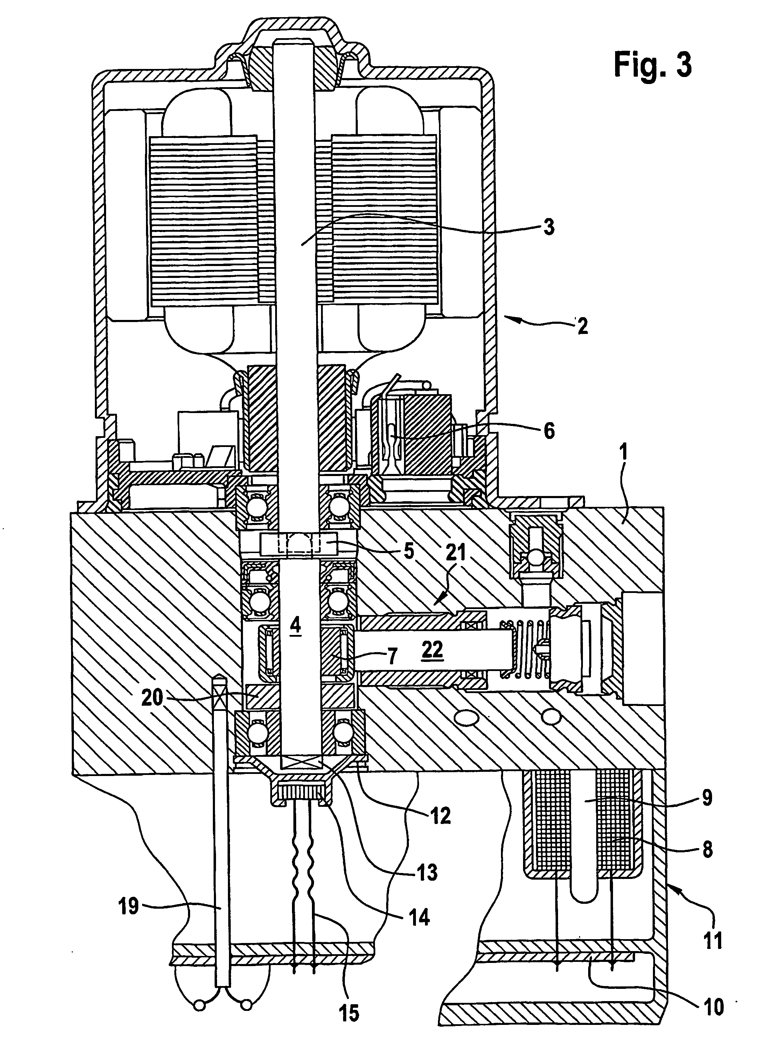

Das Aggregat umfaßt außerdem zumindest einen Sensor zur Erfassung der Drehzahl des Motors 2 bzw. von dessen Welle, wobei in Fig. 1 nur ein Sensorelement 14 bzw. 19 des Sensors dargestellt ist. In Zusammenhang mit Fig. 1 soll zunächst nur auf den Sensor mit dem Sensorelement 14 eingegangen werden. Der Sensor mit dem Sensorelement 19 wird bei der Beschreibung zu Fig. 3 näher erläutert.

Erfindungsgemäß ist das Sensorelement 14 des Sensors im Bereich der Reglereinheit 11 vorgesehen. Eine Kontaktierung 15 vom Sensorelement 14 zur Reglereinheit 11 verläuft somit gemäß der vorliegenden Erfindung innerhalb der Reglereinheit 11, wodurch im Vergleich zu einem aus dem Stand der Terchnik bekannten Sensor, der vollständig im Innenraum des Motors 2 angeordnet ist, zusätzliche äußere Leitungen bzw. eine anderweitige Kontaktierung durch den Ventil- bzw. Pumpenblock 1 hindurch entfallen können. Dies ermöglicht die Schaffung eines kostengünstigen, leichten und kleinbauenden Aggregates bzw. Motors 2 bzw. Ventil- bzw. Pumpenblocks 1 und ferner eine sichere und einfache Übertragung des Drehzahlsignales.

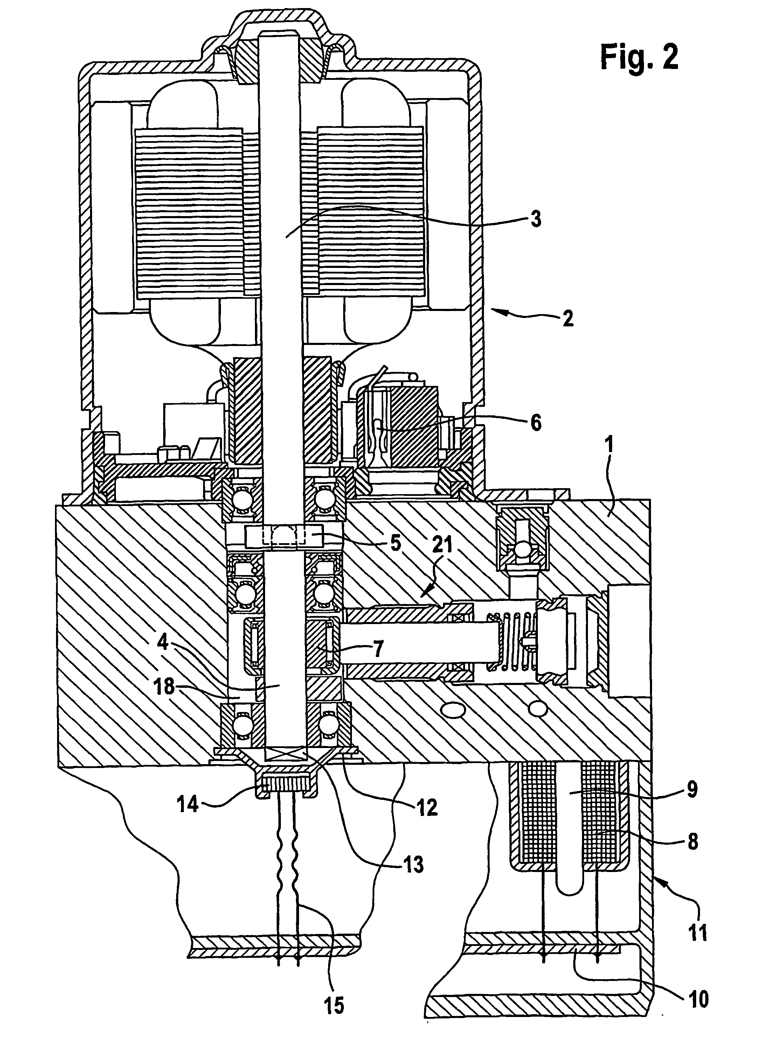

Weitere Vorteile der vorliegenden Erfindung werden in Zusammenhang mit Fig. 2 verdeutlicht, die ein erfindungsgemäßes Aggregat teilweise im Schnitt zeigt. Die Reglereinheit 11 weist insbesondere eine Platine 10 auf, wobei das Sensorelement 14 über die Kontaktierung 15 vorzugsweise direkt mit der Platine 10 verbunden ist. In der Kontaktierung 15, d.h. zwischen Sensorelement 14 und Platine 10, kann insbesondere auch eine Steckverbindung (nicht dargestellt) vorhanden sein, so daß eine Trennung von Ventil- bzw. Pumpenblock 1 und Reglereinheit 11 möglich ist. Die Reglereinheit 11 ist nämlich gemäß einer besonders bevorzugten Ausführungsform der vorliegenden Erfindung als ein eigenständig handhabbares Bauteil ausgebildet. Mit Vorteil wird erfindungsgemäß der freie Bauraum zwischen dem Ventilen 8, 9 bzw. zwischen dem Ventil- bzw. Pumpenblock 1 und der Platine 10 genutzt. Aufgrund der Anordnung der Kontaktierung 15 bzw. des Sensorelementes 14 werden ferner Störungen bei der Übertragung des Drehzahlsignales reduziert, außerdem wird das Aggregat robuster. Beispielsweise kann eine höhere Verschmutzung im Bereich des Motors 2 bzw. von dessen Bürsten zugelassen werden, da das Drehzahlsignal dadurch nicht gestört wird.

Als Sensor 12, 13, 14 kann beispielsweise ein optischer Sensor oder auch ein magnetosensitiver Sensor mit einem optischen bzw. magnetosensitiven Sensorelement 14 vorgesehen sein. Mögliche Beispiele für einen optischen Sensor sind Sensoren, die mittels Laser, Infrarot oder einer Fotozelle funktionieren.

Vorzugsweise ist ein Kodierelement 13 des Sensors drehfest an der Welle 3 bzw. an sich mit der Welle 3 mitdrehenden Bauteilen angeordnet, wie etwa an einem Exzenter 7 der Pumpe 21 oder an einer Abtriebswelle 4, die über eine Kupplung 5 drehfest mit der Welle 3 verbunden ist. Das Kodierelement 13 kann beispielsweise magnetisch sein oder einen optischen Kontrast aufweisen.

Zwischen dem Kodierelement 13 und dem Sensorelement 14 ist vorzugsweise eine Abdeckung 12 vorgesehen. Die Abdeckung 12 verhindert, daß beispielsweise Hydraulik- oder Schmierflüssigkeit aus einem Kurbelraum 18 der Pumpe 21 das Sensorelement 14 verschmutzen oder beschädigen kann. Bei dieser Flüssigkeit muß es sich nicht zwangsweise um Leckageflüssigkeit handeln, der Kurbelraum 18 kann auch vollständig mit Hydraulikflüssigkeit gefüllt sein, wobei dann die Abdeckung 12 besonders vorteilhaft ist. Entsprechend den oben genannten Sensorvarianten kann die Abdeckung 12 beispielsweise antimagnetisch und/oder transparent ausgebildet sein.

In Fig. 3 ist eine Weiterbildung der vorliegenden Erfindung dargestellt, wobei auf bereits in Zusammenhang mit Fig. 2 beschriebene Baueile nicht näher eingegangen werden soll. Im Unterschied zum vorherigen Ausführungsbeispiel ist ein Kodierelement 20 scheibenartig an der Abtriebswelle 4 ausgebildet, wobei das Sensorelement 19 radial bezüglich des Kodierelementes 20 und auch teilweise innerhalb des Ventil- bzw. Pumpenblocks 1 angeordnet sein kann, der bevorzugt aus einem nicht magnetischen Material wie beispielsweise Aluminium hergestellt ist.

Die Sensierung zwischen Kodier- und Sensorelement kann also axial (19, 20) und/oder radial (13, 14) erfolgen. Es ist beispielsweise aus Sicherheitsgründen erfindungsgemäß auch möglich, daß mehrere Sensoren 12, 13, 14 bzw. 19, 20 eingesetzt werden, die sich gegenseitig überwachen bzw. redundant sind. Ferner ist es erfindungsgemäß möglich, daß ein Sensor (nicht gezeigt) anstatt der Drehung der Welle 3 bzw. 4 die Bewegung von Kolben 22 der Pumpe 21 erfaßt, aus der dann die Drehzahl des Motors 2 ermittelt werden kann.

## Patentansprüche

1. Aggregat für eine elektronisch geregelte Bremsanlage mit einem Motor (2), der über eine Welle (3, 4) eine Pumpe (21) antreibt, die in einem Ventil- bzw. Pumpenblock (1) angeordnet ist und Hydraulikflüssigkeit in Radbremsen der Bremsanlage fördert, und mit einer Reglereinheit (11), die auf einer dem Motor (2) gegenüberliegenden Seite des Ventil- bzw. Pumpenblocks (1) vorgesehen ist, wobei das Aggregat wenigstens einen Sensor (12, 13, 14; 19, 20) zur Erfassung der Drehzahl des Motors (2) bzw. der Welle (3, 4) umfaßt, **dadurch gekennzeichnet, daß** zumindest ein Sensorelement (14, 19) des Sensors (12, 13, 14; 19, 20) im Bereich der Reglereinheit (11) vorgesehen ist, so dass eine Kontaktierung (15) vom Sensorelement (14) zur Reglereinheit (11) innerhalb der Reglereinheit (11) verläuft.

2. Aggregat nach Anspruch 1, **dadurch gekennzeichnet, daß** die Reglereinheit (11) eine Platine (10) aufweist, wobei das Sensorelement (14, 19) über eine Kontaktierung (15) direkt mit der Platine (10) verbunden ist.

3. Aggregat nach Anspruch 1 oder 2, **dadurch gekennzeichnet, daß** der Sensor (12, 13, 14; 19, 20) als optischer Sensor (12, 13, 14) oder als magnetosensitiver Sensor (12, 13, 14; 19, 20) ausgebildet ist.

4. Aggregat nach einem der vorhergehenden Ansprüche, **dadurch gekennzeichnet, daß** ein Kodierelement (13, 20) des Sensors (12, 13, 14; 19, 20) drehfest an der Welle (3, 4) angeordnet ist.

5. Aggregat nach Anspruch 4, **dadurch gekennzeichnet, daß** das Kodierelement (13, 20) magnetisch ist bzw. zumindest einen optischen Kontrast aufweist.

6. Aggregat nach Anspruch 4 oder 5, **dadurch gekennzeichnet, daß** zwischen dem Kodierelement (13) und dem Sensorelement (14) eine Abdeckung (12) vorgesehen ist.

7. Aggregat nach Anspruch 6, **dadurch gekennzeichnet, daß** die Abdeckung (12) antimagnetisch und/oder transparent ausgebildet ist.

8. Aggregat nach einem der vorhergehenden Ansprüche, **dadurch gekennzeichnet, daß** die Reglereinheit (11) ein eigenständig handhabbares Bauteil ist.

## Claims

1. Unit for an electronically controlled brake system including a motor (2) that drives a pump (21) by way of a shaft (3, 4), said pump being arranged in a valve or pump block (1) and supplying hydraulic fluid into wheel brakes of the brake system, and a controller unit (11) provided on a side of the valve or pump block (1) opposite to the motor (2), wherein the unit comprises at least one sensor (12, 13, 14; 19, 20) for sensing the rotational speed of the motor (2) or the shaft (3, 4),
**characterized in that** at least one sensor element (14, 19) of the sensor (12, 13, 14; 19, 20) is arranged in the area of the controller unit (11) so that a contacting (15) between the sensor element (14) and the controller unit (11) extends within the controller unit (11).

2. Unit as claimed in claim 1,
**characterized in that** the controller unit (11) includes a board (10), and the sensor element (14, 19) is connected directly to the board (10) by way of contacting (15).

3. Unit as claimed in claim 1 or 2,
**characterized in that** the sensor (12, 13, 14; 19, 20) is designed as an optical sensor (12, 13, 14) or as a magneto-sensitive sensor (12, 13, 14; 19, 20).

4. Unit as claimed in any one of the preceding claims,
**characterized in that** a coding element (13, 20) of the sensor (12, 13, 14; 19, 20) is unrotatably arranged on the shaft (3, 4).

5. Unit as claimed in claim 4, **characterized in that** the coding element (13, 20) is magnetic or includes at least one optical contrast.

6. Unit as claimed in claim 4 or 5, **characterized in that** a cover (12) is provided between the coding element (13) and the sensor element (14).

7. Unit as claimed in claim 6,
**characterized in that** the cover (12) has an anti-magnetic and/or transparent design.

8. Unit as claimed in any one of the preceding claims,
**characterized in that** the controller unit (11) is an independent component.

## Revendications

1. Agrégat pour un système de frein commandé de manière électronique comportant un moteur (2) commandant une pompe (21) par l'intermédiaire un arbre (3, 4), la pompe étant arrangée dans un bloc de soupape ou de pompe (1) transportant de liquide hydraulique aux freins de roue du système de frein, et comportant un dispositif de contrôle (11) prévu sur un côté du bloc de soupape ou de pompe (1) opposant du moteur (2), l'agrégat comportant au moins un palpeur (12, 13, 14; 19, 20) pour déterminer le nombre de tours du moteur (2) ou de l'arbre (3, 4), **caractérisé en ce qu'**un élément (14, 19) du palpeur (12, 13, 14; 19, 20) est prévu dans la région du dispositif de contrôle (11) ainsi qu'un contact (15) entre l'élément de palpeur (14) et le dispositif de contrôle (11) se passe dedans le dispositif de contrôle (11).

2. L'agrégat selon la revendication 1, **caractérisé en ce que** le dispositif de contrôle (11) comporte une disque (10), l'élément de palpeur (14, 19) étant lié de manière directe à la disque (10) par l'intermédiaire d'un contact (15).

3. L'agrégat selon les revendications 1 ou 2, **caractérisé en ce que** le palpeur (12, 13, 14 ; 19, 20) est formé comme palpeur optique (12,13,14) ou comme palpeur magnéto-sensitif (12, 13, 14; 19, 20).

4. L'agrégat selon l'une des revendications précédentes, **caractérisé en ce qu'**un élément de codage (13, 20) du palpeur (12, 13, 14; 19, 20) est disposé sur l'arbre de manière non-rotative.

5. L'agrégat selon la revendication 4, **caractérisé en ce que** l'élément de codage (13, 20) est magnétique ou comporte au moins un contraste optique.

6. L'agrégat selon les revendication 4 ou 5, **caractérisé en ce que** le recouvrement (12) est prévu entre l'élément de codage (13) et l'élément de palpeur (14).

7. L'agrégat selon la revendication 6, **caractérisé en ce que** le recouvrement (12) est sous forme non-magnétique et/ou transparent.

8. L'agrégat selon l'une des revendications précédentes, **caractérisé en ce que** le dispositif de contrôle (11) est un élément à opérer de manière indépendante.
